# EUROPÄISCHE PATENTSCHRIFT

(11) **EP 2 785 595 B1**
(45) Veröffentlichungstag und Bekanntmachung des Hinweises auf die Patenterteilung: **04.11.2015**
(21) Anmeldenummer: 12759655.9
(22) Anmeldetag: 12.09.2012
(51) Int. Cl.: B65B 17/02, B65B 21/00, B65B 35/16, B65B 35/24, B65B 35/44, B65B 35/56, B65G 47/08

(54) **VORRICHTUNG UND VERFAHREN ZUR BILDUNG VON VERPACKUNGSEINHEITEN**
DEVICE AND METHOD FOR FORMING PACKING UNITS
DISPOSITIF ET PROCÉDÉ DE FORMATION D'UNITÉS D'EMBALLAGE

(30) Priorität: 02.12.2011 DE 102011119964
(43) Veröffentlichungstag der Anmeldung: 08.10.2014
(73) Patentinhaber: KHS GmbH, 44143 Dortmund (DE)
(72) Erfinder: STUHLMANN, Christopher, 34497 Korbach (DE); VAN WICKEREN, Ernst, 47652 Weeze (DE); ZAHN, Volker, 34471 Volkmarsen (DE); NITSCH, Thomas, 47533 Kleve (DE); WAGNER, Stefan, 46509 Xanten (DE)
(86) Internationale Anmeldenummer: PCT/EP2012/003816
(87) Internationale Veröffentlichungsnummer: WO 2013/079128

(56) Entgegenhaltungen:
- WO-A1-2009/059876
- DE-A1- 2 331 193
- DE-A1-102009 025 824
- DE-A1-102009 044 271
- DE-B- 1 294 872
- DE-B3-102011 119 966
- DE-B3-102012 005 925

## Beschreibung

Die Erfindung bezieht sich auf eine Vorrichtung und auf ein Verfahren zur Herstellung von Gebinden, wobei aus einem breitem Behälterstrom mittels Gassenteilung Behälter in mehrere einspurige Behälterströme umgewandelt werden, in welchem die Behälter beispielsweise bezüglich ihrer Behälter - und/oder Ausstattungsmerkmale eine willkürliche Orientierung aufweisen. Hierbei werden mit mindestens einer Abteil und/oder Verdichtereinheit zum Abteilen und Verdichten einer vorbestimmten Anzahl an Behältern, verdichtete oder formierte Behältergruppen oder Teilgebinde gebildet und nachfolgend jeweils zu einem späteren Gebinde zusammengefasst, wobei Auftragselemente vorgesehen sind, so dass zumindest auf einen der Behälter des Gebindes ein Haft- oder Klebemittel und/oder einen Haft- oder Klebemittelauftrag zumindest an einer Kontakt- oder Berührfläche aufgebracht wird.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport oder in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen sowie stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 B2) feste und transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 A1 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt oder wieder hergestellt werden kann.

Zur Lösung dieser Aufgabe ist eine Vorrichtung zur Herstellung von Gebinden entsprechend dem Patentanspruch 1 vorgesehen, sowie ein Verfahren nach Anspruch 10. Bei der Vorrichtung ist hierbei ein Lineartransporteur vorgesehen, welcher die Behälter von einer Eingangsseite in Richtung zu einer Ausgangsseite transportiert, wobei der Lineartransporteur drei Abschnitte aufweist, wobei der erste Abschnitt des Lineartransporteurs drei Teilbereiche aufweist, wobei in dem ersten Teilbereich Transportflächen einander parallel sind, wobei die Transportflächen in dem zweiten Teilbereich zur Bildung des jeweiligen Teilgebindes zusammengeführt werden, und wobei das jeweilige Teilgebinde im dritten Teilbereich quer zur Transportrichtung ausgerichtet in Richtung zum zweiten Abschnitt des Lineartransporteurs transportiert wird, wobei in einem ersten und in einem zweiten Abschnitt des Lineartransporteurs Auftragselemente zum Auftragen von Haft- oder Klebemittel vorgesehen sind, und wobei querverschiebbare Kopfführungen in dem ersten Abschnitt des Lineartransporteurs vorgesehen sind, und wobei der zweite Abschnitt als Dreh- und Zuführabschnitt von Teilgebinden ausgeführt ist, und wobei die Teilgebinde in einem dritten Abschnitt in Transportrichtung ausgerichtet zu dem Gesamtgebinde zusammengeführt und in Richtung zur Austragsseite transportiert werden.

Gemäß dem Verfahren werden aus einem breitem Behälterstrom Behälter in mehrere einspurige Behälterströme umgewandelt und durch Abtrennen und Zusammenführen einer vorbestimmten Anzahl an Behältern, Teilgebinde gebildet und diese nachfolgend jeweils zu dem Gebinde zusammengefasst werden. Hierbei weist zumindest einer der Behälter des Gebindes einen Haft- oder Klebemittelauftrag an zumindest einer Kontakt- oder Berührfläche auf.

Dazu umfasst das Verfahren zumindest die folgenden Schritte, nämlichdas Versehen zumindest eines der Behälter des jeweiligen Teilgebindes mit Haft- oder Klebemittel in einem ersten Abschnitt des Lineartransporteurs, das Zusammenführen der Behälter zu dem jeweiligen Teilgebinde indem die betreffenden Kopfführungen querverschoben werden, das Transportieren des jeweiligen Teilgebindes unter Krafteinwirkung mittels der Kopfführungen quer ausgerichtet zur Transportrichtung, das Ausrichten des jeweiligen Teilgebindes längs zur Transportrichtung, das Versehen zumindest eines der Behälter des jeweiligen Teilgebindes mit Haft- oder Klebemittel in einem zweiten Abschnitt des Lineartransporteurs, das Zusammenführen der jeweiligen Teilgebinde in einem dritten Abschnitt des Lineartransporteurs zu dem Gebinde und den Weitertransport des Gebindes in dem dritten Abschnitt unter Krafteinwirkung.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf oder ist mit einem Haft- und Klebemittelauftrag versehen. Das Haft- oder Klebemittel ist bevorzugt derart gewählt, dass die Behälter händisch und zerstörungsfrei aus dem Gebinde lösbar oder voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation oder eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein.

Zielführend ist, wenn der Lineartransporteur in seinem ersten Abschnitt mehrere Transportflächen aufweist, welche die Behälter von der Eingangsseite in Richtung zur Austragsseite und in Richtung zum zweiten Abschnitt des Lineartransporteurs begleiten. Zweckmäßig ist dabei, wenn die Anzahl der Transportflächen der Anzahl der einspurigen Behälterströme entspricht. Beispielhaft können sechs Transportflächen vorgesehen sein. Der erste Abschnitt des Lineartransporteurs weist in günstiger Ausgestaltung drei Teilbereiche auf, von denen sich ein erster Teilbereich von der Eingangsseite in Richtung zum zweiten Teilbereich erstreckt, welcher an den dritten Teilbereich anschließt, der sich bis zu dem zweiten Abschnitt des Lineartransporteurs erstreckt. In dem ersten Teilbereich sind die beispielhaften sechs Transportflächen einander parallel. In dem zweiten Teilbereich werden die einspurigen Behälterströme zur Bildung des jeweiligen Teilgebindes zusammengeführt. In dem dritten Teilbereich wird das jeweilige Teilgebinde in Richtung zum zweiten Abschnitt transportiert. Beispielhaft können zwei Teilgebinde gebildet werden, welche jeweils drei Behälter aufweisen. Insofern ist es günstig im Sinne der Erfindung, wenn die zuvor beispielhaft genannten sechs einspurigen Behälterströme so zusammengeführt werden, dass jeweils beispielhaft drei einspurige Behälterströme das betreffende Teilgebinde ergeben. Zielführend ist dabei, wenn jeweils eine mittlere der jeweils drei Transportflächen in dem zweiten Teilbereich einander parallel und auch parallel zu einer Mittelachse des Lineartransporteurs sind, wobei die bezogen auf die jeweils mittlere Transportfläche jeweils äußeren und inneren Transportflächen von außen in Richtung zur Mittelachse des Lineartransporteurs bzw. von innen von der Mittelachse des Lineartransporteurs wegorientiert auf die jeweils mittlere Transportfläche hin geführt werden. So werden zwei Teilgebinde, welche jeweils drei Behälter aufweisen gebildet. In Aufsicht gesehen kann auch grob von einer quasi kegelartigen Ausgestaltung des zweiten Teilbereiches mit seinen jeweils drei Behälterspuren gesprochen werden, welcher sich quasi von dem Übergang des ersten Teilbereiches zum dritten Teilbereich hin verjüngt.

Zweckmäßig ist nun, wenn Auftragselemente vorgesehen sind, welche z.B. in dem zweiten Teilbereich des ersten Abschnittes des Lineartransporteurs angeordnet sind, und jeweils lediglich die Behälter der mittleren Behälterspur mit Haft- oder Klebemittel versieht. Es ist im Sinne der Erfindung ausreichend lediglich einen Behälter des Teilgebindes, bevorzugt den mittleren Behälter an seinen Kontakt- und Berührflächen mit dem Haft- und/oder Klebemittel zu versehen.

In dem dritten Teilbereich werden die jeweils drei Behälter nebeneinander, also das Teilgebinde in Aufsicht gesehen quer zur Transportrichtung ausgerichtet in Richtung zum zweiten Abschnitt gefördert. Im ersten Abschnitt, bevorzugt in dessen dritten Teilbereich kann eine Aushärtestation oder -strecke vorgesehen sein, wenn UV-aushärtender Klebstoff aufgetragen ist.

Günstig ist, wenn die Kopfführungen an dem ersten Abschnitt des Linear-transporteurs angeordnet sind. Die Kopfführungen können quasi entsprechend einer Tulpe, wie diese z.B. aus Etikettiermaschinen bekannt sind, ausgeführt sein. Die Anzahl der Kopfführungen entspricht der Anzahl an einspurigen Behälterströmen, so dass beispielhaft sechs Kopfführungen vorgesehen werden können. Die Kopfführungen sind an Quertraversen gelagert, wobei an jeder Quertraverse die entsprechende Anzahl an Kopfführungen angeordnet ist. Natürlich sind mehrere Quertraversen vorgesehen. Die Quertraversen sind umlaufend ausgeführt, und an einen Antriebselement, z.B. einer Kette oder an einem Riemen befestigt. Die Kopfführungen übergreifen den Behälterkopf von oben, so dass ein lagesicherer Transport der Behälter in Transportrichtung möglich ist. Am Ende des ersten Abschnittes heben sich die Kopfführungen von den Behältern ab. Wie bereits gesagt sind die Kopfführungen querverschiebbar. Dies ist sinnvoll, um die Behälterströme, d.h. die jeweils äußeren und jeweils inneren Behälterströme in dem zweiten Teilbereich weiter lagesicher transportieren zu können, wenn die Behälter entsprechend der Ausgestaltung des Transportweges im zweiten Teilbereich nachgeführt werden. Mit anderen Worten ermöglichen die Kopfführungen die lagesichere Zusammenführung der jeweils drei Behälterströme zu dem betreffenden Teilgebinde, auch entlang der in Richtung zur jeweils mittleren Transportfläche quasi schräg verlaufenden Transportflächen. Die Kopfführungen haben aber noch die Funktion eine hinreichende Kraft auf die zusammengeführten Behälter auszuüben, was einem Haft- oder Klebverbund sehr zuträglich ist. Zweckmäßig ist im Sinne der Erfindung, wenn die Kopfführungen relativ zu den Quertraversen verschiebbar sind, wobei die Kopfführungen sinnvoller Weise einen entsprechenden Antrieb aufweisen. Dabei werden die jeweils äußeren und inneren Kopfführungen mit daran geführten Behältern aufeinander zugeführt, wobei die Teilgebinde oder deren Behälter entlang ihres Transportweges unter Krafteinwirkung gegeneinander gepresst werden. Der Antrieb der Kopfführungen entlang der Transportrichtung aber auch zum Aufsetzen und Abheben kann als Kulissenführung ausgeführt sein, wobei die Kopfführung mit einem Steuerelement in die entsprechende Führung eingreift. Möglich ist auch ein motorischer Antrieb, bevorzugt ein elektromotorischer Antrieb.

Vorteilhaft können im ersten Abschnitt Mitnehmerelemente vorgesehen sein, welche umlaufend ausführbar sind, und welche in Zusammenwirken mit den Kopfführungen, den Transport entlang der Transportfläche unterstützen können.

In dem zweiten Abschnitt, welcher sich an den ersten Abschnitt des Linear-transporteurs anschließt, werden die Teilgebinde aus Ihrer quer zur Transportrichtung orientierten Ausrichtung bevorzugt um 90° so gedreht, dass die Teilgebinde spätestens im dritten Abschnitt längs zur Transportrichtung ausgerichtet sind. Diese Drehung kann mit einer Wendevorrichtung oder mit entsprechend ausgeführten Transportflächen geschehen. Beispielsweise könnten die zunächst mehrere Transportflächen in dem zweiten Abschnitt jeweils unterschiedliche Geschwindigkeiten zueinander aufweisen, so dass ein Ende des jeweiligen Teilgebindes in die Transportrichtung orientiert ausgerichtet wird. Dieser Ausrichteffekt kann unterstützt werden, wenn der zweite Abschnitt in seiner Transportbreite bevorzugt kontinuierlich verjüngt wird, so dass in einem Endbereich des zweiten Abschnittes die Transportbreite etwas größer bemessen ist als der Durchmesser des Behälters, wobei im Endbereich noch dazu lediglich eine Transportbahn für das jeweilige Teilgebinde vorgesehen ist. Der zweite Abschnitt ist in seinem Endbereich mit jeweils nur einer Transportbahn ausgeführt, welche die beiden Teilgebinde in bevorzugter Ausführung schräg zur Transportrichtung aufeinander zu leiten. Die Transportbahnen sind antreibbar, und umlaufend ausführbar. In dem Endbereich sind weitere Auftragselemente vorgesehen, welche nun die Kontakt- und Berührflächen der in dem jeweiligen Teilgebinde angeordneten Behälter mit Klebe- oder Haftmittel versehen. Dabei ist auch die Maßnahme vorteilhaft, dass die Transportbreite des jeweiligen Transportbahnen etwas größer ist als der Durchmesser der Behälter, da ansonsten die mit dem Klebe- oder Haftmittel versehene "Klebeseite" an Begrenzungswänden oder an Führungselementen entlang gleiten könnte, wodurch der Klebe- oder Haftmittelauftrag beeinträchtigt würde.

Die beiden Teilgebinde werden ausgangs des zweiten Abschnittes und eingangs des dritten Abschnittes zu dem Gesamtgebinde zusammengeführt, wobei die mit Klebe- oder Haftmittel versehenen Kontakt- und Berührflächen aneinander liegen. Der dritte Abschnitt weist zwei Transportbahnen, also für jedes ursprüngliche Teilgebinde jeweils eine Transportbahn auf. An den Transportbahnen sind seitlich Führungselemente angeordnet. Die Führungselemente sind quer zur Transportrichtung so beabstandet, dass das Gesamtgebinde bzw. die darin enthaltenden Behälter aneinander gedrückt und gepresst werden, wobei die Krafteinwirkung wiederum zweckdienlich zur Herstellung des Klebe- oder Haftverbundes ist. Die Führungselemente können auch als Geländer bezeichnet werden, welche die Gebinde oder die Behälter des Gebindes zwischen sich führen und stützen. Denkbar ist, die Führungselemente starr auszuführen. Möglich ist aber auch, die Führungselemente mitlaufend zu den Transportbahnen auszuführen, so dass die Behälter oder die Gebinde keine Relativgeschwindigkeit zu den seitlich angeordneten Führungselementen aufweisen. Mit den seitlich angeordneten Führungselementen kann ein seitlicher Druck erzeugt werden, welcher einer Klebverbindung der Behälter des Gebindes zweckdienlich ist. Mit anderen Worten haben die Führungselemente nicht nur die Funktion des Führens und Stützens sondern auch noch die Funktion eine auf die Behälter wirkende Kraft zu erzeugen, welche die Behälter des Gebindes quer zur Transportrichtung gesehen verdichtet und einander annähert, gegeneinander drückt oder anpresst, um so eine hinreichende Klebverbindung bewirken zu können.

Wird UV-aushärtender Klebstoff aufgetragen, kann eine Aushärtestation oder -strecke im dritten Abschnitt angeordnet sein. Um den Transport der Gesamtgebinde in Richtung zur Austragsseite zu unterstützen, könnten an dem dritten Abschnitt Mitnehmerelemente, wie im ersten Abschnitt auch, vorgesehen werden.

Das Gebinde, also dass aus den Teilgebinden zusammengeführte Gesamtgebinde kann in Transportrichtung gesehen mehrreihig, also beispielhaft zweireihig oder z.B. dreireihig ausgeführt.

Möglich ist, das Gebinde, also das Gesamtgebinde noch mit einem Trageelement, beispielsweise mit einem Griff zu versehen, wozu geeignete Vorrichtungen vorgesehen werden können, welche stromab der Austragsseite oder an geeigneter Stelle an dem Lineartransporteur angeordnet ist. Natürlich kann das Tragelement mit dem zuvor genannten Haft- oder Klebemittel an dem Gebinde befestigt werden.

Die Lösung des verfahrenstechnischen Teils der Aufgabe gelingt mit einem Verfahren mit den Merkmalen des Anspruchs 10, aufweisend zumindest die Schritte, dass zumindest einer der Behälter eines Teilgebindes zumindest an seinen Kontakt und Berührflächen mittels Auftragselementen mit einem Haft- oder Klebemittel versehen wird, die Behälter eines Teilgebindes mittels der Kopfführungen zusammengeführt und unter Krafteinwirkung weiter transportiert werden, wobei das jeweilige Teilgebinde quer zur Transportrichtung ausgerichtet ist, und wobei die jeweiligen Teilgebinde in einem zweiten Abschnitt des Lineartransporteurs gedreht, bevorzugt um 90° gedreht werden, so dass die Teilgebinde ausgangsseitig des zweiten Abschnitts und eingangsseitig eines sich daran anschließenden dritten Abschnittes des Lineartransporteurs längs zur Transportrichtung ausgerichtet sind, wobei mit weiteren Auftragselementen zumindest einer der Behälter des jeweiligen Teilgebindes bevorzugt jeder der Behälter des jeweiligen Teilgebindes zumindest an seinem Kontakt- und Berührflächen mit Haft- oder Klebemittel versehen wird, wobei die Teilgebinde in dem dritten Abschnitt zu dem Gesamtgebinde zusammengeführt einander geklebt unter Querkrafteinwirkung weiter transportiert werden.

Mit der Erfindung wird so eine Vorrichtung und ein Verfahren zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt und/oder wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, direkt aneinander geklebt. Vorteilhaft ist auch, dass die einzelnen Behälter nicht verdreht werden müssen, um z.B. den Klebstoff hinreichend auftragen zu können. Zudem ist ein folienloses Flaschenpack bei minimalem Klebemittelauftrag erreichbar, welcher eine hinreichende Bindung der einzelnen Behälter zueinander aufweist. Die Auftragselemente können natürlich starr an der Vorrichtung angeordnet sein, oder entlang einer Teilstrecke mitgeführt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes mit sechs Artikeln oder Behältern in einer Aufsicht, und
- Fig. 2: den Teilabschnitt aus Figur 1 in einer Seitenansicht,

In den unterschiedlichen Figuren sind gleiche Teile stets mit denselben Bezugszeichen versehen, weswegen diese in der Regel auch nur einmal beschrieben werden. Im Folgenden werden Artikel als Behälter bezeichnet.

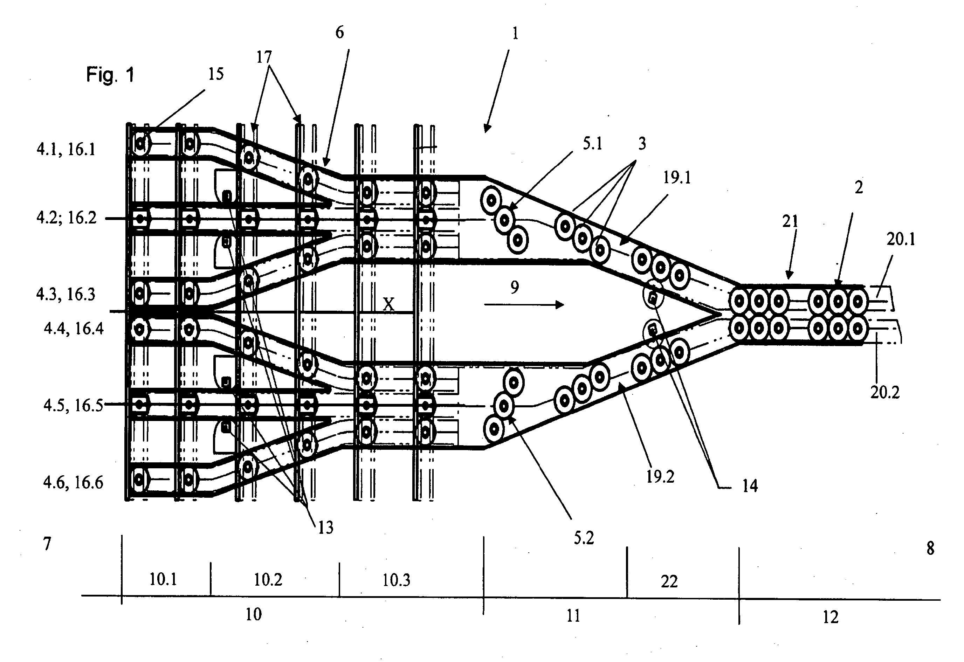

Figur 1 zeigt einen Teilabschnitt einer Vorrichtung 1 zur Herstellung von Gebinden 2 aus Behältern 3, wobei im Vorfeld aus einem breitem Behälterstrom Behälter in mehrere einspurige Behälterströme 4.1 bis 4.6 umgewandelt werden, in welchem die Behälter 3 beispielsweise bezüglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise drei Behälter 3, verdichtete oder formierte Behältergruppen 5.1 und 5.2 oder Teilgebinde 5.1 und 5.2 gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist. Die Kontakt- und Berührflächen sind in den Figuren eindeutig durch Anlage der Behälter 3 aneinander erkennbar, aber nicht mit einem Bezugszeichen versehen.

Figur 1 zeigt, dass ein Lineartransporteur 6 vorgesehen ist, welcher die Behälter 3 von einer Eingangsseite 7 in Richtung zu einer Ausgangsseite 8 transportiert. Die Transportrichtung von der Eingangsseite 7 zur Austragsseite 8 ist mittels des Pfeils 9 dargestellt. Die Verpackungsmaschine 1 weist eine Mittelasche X, sowie drei Abschnitte 10,11 und 12 auf. Der erste Abschnitt 10 beginnt eingangsseitig, geht bin den zweiten Abschnitt 11 über, welcher an den dritten Abschnitt 12 anschließt.

In einem ersten Abschnitt 10 und in einem zweiten Abschnitt 11 des Lineartransporteurs 6 sind Auftragselemente 13, 14 zum Auftragen von Haft- oder Klebemittel vorgesehen, wobei querverschiebbare Kopfführungen 15 in dem ersten Abschnitt 10 des Lineartransporteurs vorgesehen sind, und wobei der zweite Abschnitt 11 als Dreh- und Zuführabschnitt der Teilgebinde 5.1 und 5.2 ausgeführt ist. Die Teilgebinde 5.1 und 5.2 werden in einem dritten Abschnitt zu dem Gesamtgebinde 2 zusammengeführt und in Richtung zur Austragsseite 8 transportiert.

Zielführend ist, wenn der Lineartransporteur 6 in seinem ersten Abschnitt mehrere Transportflächen 16.1 bis 16.6 aufweist, welche die Behälter 3 jeweils einspurig (4.1 bis 4.6) von der Eingangsseite 7 in Richtung zur Austragsseite 8 und in Richtung zum zweiten Abschnitt 11 des Lineartransporteurs 6 fördern. Beispielhaft sind sechs Transportflächen 16.1 bis 16.6 vorgesehen.

Der erste Abschnitt 10 des Lineartransporteurs weist drei Teilbereiche 10.1 bis 10.3 auf, von denen sich ein erster Teilbereich 10.1 von der Eingangsseite 7 in Richtung zum zweiten Teilbereich 10.2 erstreckt, welcher an den dritten Teilbereich 10.3 anschließt, der sich bis zu dem zweiten Abschnitt 11 des Lineartransporteurs 6 erstreckt.

In dem ersten Teilbereich 10.1 sind die beispielhaften sechs Transportflächen 16.1 bis 16.6 einander parallel. In dem zweiten Teilbereich 10.2 werden die einspurigen Behälterströme 4.1 bis 4.6, also die Transportflächen 16.1 bis 16.6 zur Bildung des jeweiligen Teilgebindes 5.1 und 5.2 zusammengeführt.

In dem dritten Teilbereich 10.3 wird das jeweilige Teilgebinde 5.1 und 5.2 in Richtung zum zweiten Abschnitt 11 transportiert.

Beispielhaft können zwei Teilgebinde 5.1 und 5.2 gebildet werden, welche jeweils drei Behälter 3 aufweisen. Wie beispielhaft erkennbar werden die zuvor beispielhaft genannten sechs einspurigen Behälterströme 4.1 bis 4.6 so zusammengeführt werden, dass jeweils beispielhaft drei einspurige Behälterströme 16. 1 bis 16.3 und 16.4 bis 16.6 das betreffende Teilgebinde 5.1 und 5.2 ergeben.

Jeweils eine mittlere 16.2 und 16.5 der jeweils drei Transportflächen 16.1 bis 16.3 und 16.4 bis 16.6 sind in dem zweiten Teilbereich 10.2 einander parallel und auch parallel zu der Mittelachse X des Lineartransporteurs. Die bezogen auf die jeweils mittlere Transportfläche16.2 und 16.5 jeweils äußeren 16.1 und 16.6 und inneren Transportflächen 16.3 und 16.4 von außen in Richtung zur Mittelachse X des Lineartransporteurs 6 bzw. von innen von der Mittelachse X des Lineartransporteurs 6 wegorientiert auf die jeweils mittlere Transportfläche 16.2 und 16.5 hin geführt werden. So werden die zwei Teilgebinde 5.1 und 5.2, welche jeweils drei Behälter 3 aufweisen, gebildet. In Aufsicht gesehen kann auch grob von einer quasi kegelartigen Ausgestaltung des zweiten Teilbereiches 10.2 mit seinen jeweils drei Behälterspuren 4.1 bis 4.3 und 4.4 bis 4.6 (Transportflächen 16.1 bis 16.3 und 16.4 bis 16.6) gesprochen werden, welcher sich quasi von dem Übergang des ersten Teilbereiches 10.1 zum dritten Teilbereich 10.3 hin verjüngt.

Die Auftragselemente 13 sind in dem zweiten Teilbereich 10.2 des ersten Abschnittes 10 des Lineartransporteurs 6 angeordnet, und versehen jeweils lediglich die Behälter 3 der mittleren Behälterspur 4.2 und 4.5 (16.2 und 16.5) mit Haft- oder Klebemittel. Es ist im Sinne der Erfindung ausreichend lediglich einen Behälter 3 des Teilgebindes 5.1 und 5.2, bevorzugt den mittleren Behälter 3 an seinen Kontakt- und Berührflächen mit dem Haft- oder Klebemittel zu versehen.

In dem dritten Teilbereich 10.3 werden die jeweils drei Behälter 3 nebeneinander, also das Teilgebinde 5.1 und 5.2 in Aufsicht gesehen quer zur Transportrichtung 9 ausgerichtet in Richtung zum zweiten Abschnitt 11 gefördert.

Im ersten Abschnitt 10, bevorzugt in dessen dritten Teilbereich 10.3 kann eine Aushärtestation oder -strecke vorgesehen sein, wenn UV-aushärtender Klebstoff aufgetragen ist.

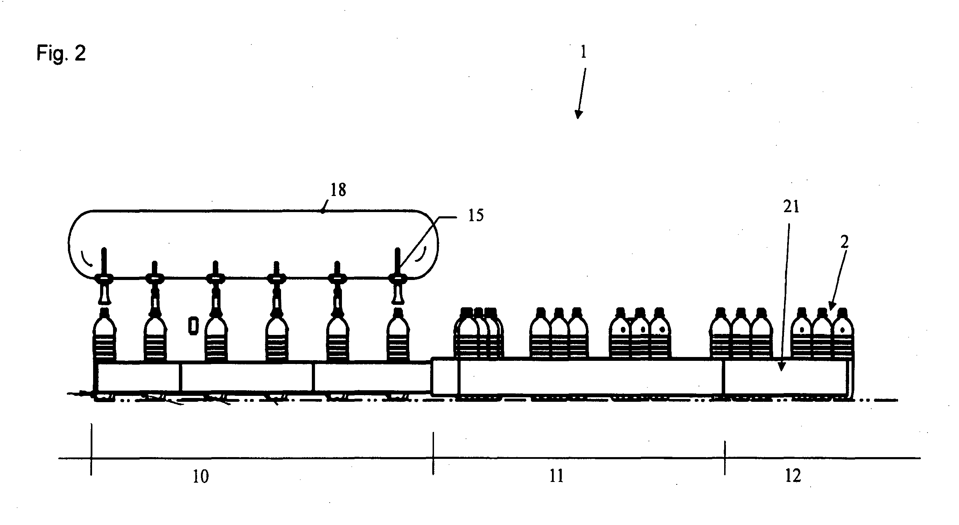

Die Kopfführungen 15 sind, wie in Figur 1 erkennbar, an dem ersten Abschnitt des Lineartransporteurs 6 angeordnet, und können quasi entsprechend einer Tulpe (Figur 2), wie diese z.B. aus Etikettiermaschinen bekannt sind, ausgeführt sein.

Die Anzahl der Kopfführungen 15 in einer Querreihe entspricht der Anzahl an einspurigen Behälterströmen 4.1 bis 4.6, so dass beispielhaft sechs Kopfführungen 15 vorgesehen werden können. Die Kopfführungen 15 sind an Quertraversen 17 gelagert, wobei an jeder Quertraverse 17 die entsprechende Anzahl an Kopfführungen 15 angeordnet sind. Natürlich sind mehrere Quertraversen 17 vorgesehen. Die Quertraversen 17 sind umlaufend ausgeführt, und an einen Antriebselement, z.B. einer Kette 18 oder an einem Riemen 18 befestigt, wie Figur 2 prinzipiell zeigt.

Die Kopfführungen 15 übergreifen den Behälterkopf von oben, so dass ein lagesicherer Transport der Behälter 3 in Transportrichtung 9 möglich ist. Eingangsseitig setzen sich die Kopfführungen 15 auf die Behälter 3 auf, und heben sich am Ende des ersten Abschnittes 10 von den Behältern ab (Figur 2).

Wie bereits gesagt sind die Kopfführungen 15 querverschiebbar. Dies ist sinnvoll, um die Behälterströme, d.h. die jeweils äußeren Behälterströme 4.1 sowie 4.6 und jeweils inneren Behälterströme 4.3 und 4.4 in dem zweiten Teilbereich 10.2 weiter lagesicher transportieren zu können, wenn die Behälter 3 entsprechend der Ausgestaltung des Transportweges im zweiten Teilbereich 10.2 nachgeführt werden. Mit anderen Worten ermöglichen die Kopfführungen 15 die lagesichere Zusammenführung der jeweils drei Behälterströme 4.1 bis 4.3 und 4.4 bis 4.6 zu dem betreffenden Teilgebinde 5.1 und 5.2, auch entlang der in Richtung zur jeweils mittleren Transportfläche 16.2 und 16.5 quasi schräg verlaufenden Transportflächen 16.1, 16.3 16.4 und 16.6.

Die Kopfführungen 15 haben aber noch die Funktion eine hinreichende Kraft auf die zusammengeführten Behälter 3 auszuüben, was einem Haft- oder Klebverbund sehr zuträglich ist. Wie in Figur 1 erkennbar, sind die Kopfführungen 15 relativ zu den Quertraversen 17 verschiebbar sind, wobei die Kopfführungen 15 sinnvollerweise einen entsprechenden Antrieb aufweisen. Dabei werden die jeweils äußeren und inneren Kopfführungen 15 mit daran geführten Behältern 3 aufeinander zugeführt, wobei die Teilgebinde 5.1 und 5.2 oder deren Behälter 3 entlang ihres Transportweges unter Krafteinwirkung gegeneinander gepresst werden. Der Antrieb der Kopfführungen 15 kann als Kulissenführung ausgeführt sein, wobei die Kopfführung 15 mit einem Steuerelement in die entsprechende Führung eingreift. Möglich ist auch ein motorischer Antrieb, bevorzugt ein elektromotorischer Antrieb.

In dem zweiten Abschnitt 11, welcher sich an den ersten Abschnitt 10 des Lineartransporteurs 6 anschließt werden die Teilgebinde 5.1 und 5.2 aus Ihrer quer zur Transportrichtung 9 orientierten Ausrichtung bevorzugt um 90° so gedreht, dass die Teilgebinde 5.1 und 5.2 längs zur Transportrichtung 9 ausgerichtet sind. Dieser Ausrichteffekt kann unterstützt werden, wenn der zweite Abschnitt 11 in seiner Transportbreite der beiden Gassen der Teilgebinde 5.1 und 5.2 bevorzugt kontinuierlich verjüngt wird, so dass in einem Endbereich 22 des zweiten Abschnittes 11 die Transportbreite etwas größer bemessen ist als der Durchmesser des Behälters 3, wobei im Endbereich 18 noch dazu lediglich eine Transportbahn 19.1 und 19.2 für das jeweilige Teilgebinde 5.1 und 5.2 vorgesehen ist.

Der zweite Abschnitt 11 ist also in seinem Endbereich 18 mit jeweils nur einer Transportbahn 19.1 und 19.2 pro Teilgebinde 5.1 und 5.2 ausgeführt, welche die beiden Teilgebinde 5.1 und 5.2 in bevorzugter Ausführung schräg zur Transportrichtung aufeinander zu leiten. In dem Endbereich 18 sind weitere Auftragselemente 14 vorgesehen, welche nun die Kontakt- und Berührflächen der in dem jeweiligen Teilgebinde 5.1 und 5.2 angeordneten Behälter 3 mit Klebe- oder Haftmittel versehen. Dabei ist auch die Maßnahme vorteilhaft, dass die Transportbreite der jeweiligen Transportbahnen 19 etwas größer ist als der Durchmesser der Behälter 3, da ansonsten die mit dem Klebe- oder Haftmittel versehene "Klebeseite" an Begrenzungswänden entlang gleiten könnte, wodurch der Klebe- oder Haftmittelauftrag beeinträchtigt würde.

Die beiden Teilgebinde 5.1 und 5.2 werden ausgangs des zweiten Abschnittes 11 und eingangs des dritten Abschnittes 12 zu dem Gesamtgebinde 2 zusammengeführt, wobei die mit Klebe- oder Haftmittel versehenen Kontakt- und Berührflächen aneinander liegen. Der dritte Abschnitt 12 weist zwei Transportflächen 20.1 und 20.2, also für jedes ursprüngliche Teilgebinde 5.1 und 5.2 jeweils eine Transportfläche 20.1 und 20.2 auf. An den Transportflächen 20.1 und 20.2 sind seitlich Führungselemente 21 angeordnet. Die Führungselemente 21 sind quer zur Transportrichtung 9 und zur Mittelachse X so beabstandet, dass das Gesamtgebinde 2 oder die darin enthaltenden Behälter 3 aneinander gedrückt oder gepresst werden, wobei die Krafteinwirkung wiederum zweckdienlich zur Herstellung des Klebe- oder Haftverbundes ist.

Die Führungselemente 21 können auch als Geländer bezeichnet werden, welche die Gebinde 2 oder die Behälter 3 des Gebindes 2 zwischen sich führen und stützen. Denkbar ist, die Führungselemente 21 starr auszuführen. Möglich ist aber auch, die Führungselemente 21 mitlaufend auszuführen, so dass die Behälter 3 und/oder die Gebinde 2 keine Relativgeschwindigkeit zu den seitlich angeordneten Führungselementen 21 aufweisen. Mit den seitlich angeordneten Führungselementen 21 kann ein seitlicher Druck erzeugt werden, welcher einer Klebverbindung der Behälter 3 des Gebindes 2 zweckdienlich ist. Mit anderen Worten haben die Führungselemente 21 nicht nur die Funktion des Führens und Stützens sondern auch noch die Funktion eine auf die Behälter 3 wirkende Kraft zu erzeugen, welche die Behälter 3 des Gebindes 2 quer zur Transportrichtung 9 gesehen verdichtet, und/oder einander annähert, gegeneinander drückt oder anpresst, um so eine hinreichende Klebverbindung bewirken zu können.

Wie in den Figuren 1 und 2 erkennbar, sind auch in den ersten Abschnitten 10 und 11 Führungselemente 21 vorgesehen, welche zuweilen auch als Wand bezeichnet wurden. Grundsätzlich können die Führungselemente 21 einstellbar sein, so dass Behälter 3 unterschiedlichen Durchmessers mit der Vorrichtung zu einem Gebinde 2 zusammengeführt werden können. Selbstverständlich ist auch eine kontinuierliche Anpassung zur Einstellung der lichten Breite zwischen den seitlich angeordneten Führungselementen 21 denkbar oder zielführend.

Wird UV-aushärtender Klebstoff aufgetragen, kann eine Aushärtestation oder -strecke im dritten Abschnitt 12 angeordnet sein. Um den Transport der Gesamtgebinde 2 in Richtung zur Austragsseite 8 zu unterstützen, könnten an dem dritten Abschnitt 12 Mitnehmerelemente, wie im ersten Abschnitt 10 auch, vorgesehen werden.

Das Gebinde, also dass aus den Teilgebinden zusammengeführte Gesamtgebinde kann in Transportrichtung gesehen mehrreihig, also wie dargestellt beispielhaft zweireihig oder z.B. dreireihig ausgeführt.

Möglich ist, das Gebinde 2, also das Gesamtgebinde 2 noch mit einem Trageelement, beispielsweise mit einem Griff zu versehen, wozu geeignete Vorrichtungen vorgesehen werden können, welche stromab der Austragsseite 8 oder an geeigneter Stelle an dem Lineartransporteur 6 angeordnet ist. Natürlich kann das Tragelement mit dem zuvor genannten Haft- oder Klebemittel an dem Gebinde 2 befestigt werden.

Zum Auftragen des Haft- oder Klebemittels, bevorzugt des flüssigen, also niedrigviskosen Klebemittels, mit der besonders bevorzugten Eigenschaft als UV-aushärtender Klebstoff sind die Auftragselemente 13 und 14 vorgesehen, welche als Auftragskopf oder als Spritzkopf ausgeführt sind. Wie in Figur 1 erkennbar wird nur der jeweils mittlere Behälter 3 des jeweiligen zu formenden Teilgebindes 5.1 und 5.2 mit Haft- oder Klebemittel versehen (Auftragselemente 13), wobei die Auftragselemente 13 jeweils beidseitig des mittleren Behälters 3 angeordnet sind. Die Auftragselemente 14 im zweiten Abschnitt 11 sind nahe der Zusammenführung, quasi im Enddreieck der Transportbahnen 19.1 und 19.2 angeordnet.

In dem dargestellten Ausführungsbeispiel sind die Auftragselemente 13 und 14 starr, also unbeweglich an der Vorrichtung 1 angeordnet. In weitere Ausgestaltung ist denkbar, dass die Auftragselemente 13 und 14 gemeinsam oder vereinzelt zumindest entlang einer Teilstrecke mit dem betreffenden Gebinde 2 mitfahren, um so dann in die Ausgangsposition zurückgeführt zu werden und ein neues Gebinde 2 oder dessen Behälter 3 an den Kontakt- und Berührflächen mit Klebstoff zu versehen.

Die Mitnehmerelemente können in bevorzugter Ausgestaltung als Stab, bevorzugt als Rundstab also als Mitnehmerstab ausgeführt sein. Weiter können die Mitnehmerelemente selbst angetrieben sein, und/oder mit den Führungselementen 21 in Verbindung stehen. Sind die Mitnehmerelemente angetrieben, können diese mit Gleit- oder Rollmitteln an den Führungselementen 21 entlang gleiten oder rollen. Dabei könne die Mitnehmerelemente über Zugmittel (Seil, Kette, Zahnriemen oder dergleichen) miteinander verbunden sein, so dass quasi umlaufende Mitnehmerelemente gebildet sind. Dies gilt so natürlich auch für die Mitnehmer in dem ersten Abschnitt 10.

### Bezugszeichenliste:

- 1: Vorrichtung zur Herstellung von Gebinden/Verpackungsmaschine
- 2: Gebinde
- 3: Behälter
- 4: Behälterspur (4.1 bis 4.6)
- 5: Teilgebinde (5.1 und 5.2)
- 6: Lineartransporteur
- 7: Eingangsseite
- 8: Austragseite
- 9: Transportrichtung
- 10: Erster Abschnitt von 6
- 10.1 bis 10.3: Teilbereiche von 10
- 11: Zweiter Abschnitt von 6
- 12: Dritter Abschnitt von 6
- 13: Auftragselement
- 14: Auftragselement
- 15: Kopfführungen
- 16: Transportflächen (16.1 bis 16.6)
- 17: Quertraverse
- 18: Antriebselement für 17
- 19: Transportbahn in 11 (19.1 und 19.2)
- 20: Transportbahn in 12 (20.1 und 20.2)
- 21: Führungselemente an 12
- 22: Endbereich von 11

## Patentansprüche

1. Vorrichtung zur Herstellung von Gebinden (2), wobei aus einem breitem Behälterstrom mittels Gassenteilung Behälter (3) in mehrere einspurige Behälterströme (4.1 bis 4.6) umgewandelt werden, und mit mindestens einer Abteil- und/oder Verdichtereinheit zum Abteilen und Verdichten einer vorbestimmten Anzahl an Behältern (3), Teilgebinde (5.1, 5.2) gebildet und nachfolgend jeweils zu dem späteren Gebinde (2) zusammengefasst werden, wobei Auftragselemente (13,14) vorgesehen sind, so dass zumindest an einem der Behälter (3) des Gebindes (2; 5.1, 5.2) ein Haft- oder Klebemittel und/oder einen Haft- oder Klebemittelauftrag zumindest an einer Kontakt- oder Berührfläche aufbringbar ist, **gekennzeichnet durch** einen Lineartransporteur (6), der drei Abschnitte (10,11,12) aufweist, wobei der erste Abschnitt (10) des Lineartransporteurs (6) drei Teilbereiche (10.1 bis 10.3) aufweist, wobei in dem ersten Teilbereich (10.1) Transportflächen (16.1 bis 16.6) einander parallel sind, wobei die Transportflächen (16.1 bis 16.3 und 16.4 bis 16.6) in dem zweiten Teilbereich (10.2) zur Bildung des jeweiligen Teilgebindes (5.1, 5.2) zusammengeführt werden, und wobei das jeweilige Teilgebinde (5.1 5.2) im dritten Teilbereich (10.3) quer zur Transportrichtung (9) ausgerichtet und in Richtung zum zweiten Abschnitt (11) des Lineartransporteurs (6) transportiert wird, wobei in dessen ersten und zweiten Abschnitt (10, 11) die Auftragselemente (13, 14) zum Auftragen von Haft- oder Klebemittel vorgesehen sind, wobei querverschiebbare Kopfführungen (15) zum Einzelbehältertransport in dem ersten Abschnitt (10) des Lineartransporteurs (6) vorgesehen sind, und wobei der zweite Abschnitt (11) als Dreh- und Zuführabschnitt von Teilgebinden (5.1, 5.2) ausgeführt ist, und wobei die Teilgebinde (5.1, 5.2) in einem dritten Abschnitt (12) in Transportrichtung (9) ausgerichtet zu dem Gesamtgebinde (2) zusammengeführt und in Richtung zu einer Austragsseite (8) transportiert werden.

2. Vorrichtung nach Anspruch 1, **dadurch gekennzeichnet, dass** die Auftragselemente (13) in einem zweiten Teilbereich (10.2) des ersten Abschnittes (10) des Lineartransporteurs (6) angeordnet sind, wobei die Auftragselemente (14) im Endbereich (22) des zweiten Abschnittes (11) angeordnet sind.

3. Vorrichtung nach Anspruch 1 oder 2, **dadurch gekennzeichnet, dass** die Kopfführungen (15) an Quertraversen (17) gelagert sind, welche bevorzugt an einem Antriebselement (18) befestigt und umlaufend sind.

4. Vorrichtung nach einem der vorhergehenden Ansprüche, **dadurch gekennzeichnet, dass** die Kopfführungen (15) die jeweiligen Behälter (3) des jeweiligen Teilgebindes (5.1, 5.2) in dem ersten Abschnitt (10) oder in dessen dritten Teilbereich (10.3) aneinander pressen, wobei stromaufwärts die Kontakt- und Berührflächen in dem zweiten Teilbereich (10.2) mit dem Haft- oder Klebemittel versehbar sind.

5. Vorrichtung nach einem der vorhergehenden Ansprüche, **dadurch gekennzeichnet, dass** die Teilgebinde (5.1, 5.2) in dem zweiten Abschnitt (11) längs zur Transportrichtung (9) ausrichbar sind.

6. Vorrichtung nach einem der vorhergehenden Ansprüche, **dadurch gekennzeichnet, dass** Transportbahnen (19.1, 19.2) des zweiten Abschnitts (11) in ihrer Transportbreite von dem ersten Abschnitt (10) ausgehend in Richtung zum dritten Abschnitt (12) reduziert werden, wobei die lichte Mindesttransportbreite größer bemessen ist, als ein Durchmesser der jeweiligen Behälter (3).

7. Vorrichtung nach einem der vorhergehenden Ansprüche, **dadurch gekennzeichnet, dass** in einem Endbereich (22) des zweiten Abschnittes (11) Auftragselemente (14) angeordnet sind, mittels welcher zumindest einer der Behälter (3) des jeweiligen Teilgebindes (5.1, 5.2) an dessen Kontakt- und Berührflächen mit Haft- oder Klebemittel versehbar ist.

8. Vorrichtung nach einem der vorhergehenden Ansprüche, **dadurch gekennzeichnet, dass** der dritte Abschnitt (12) zwei Transportflächen (20.1, 20.2) aufweist.

9. Vorrichtung nach einem der vorhergehenden Ansprüche, **dadurch gekennzeichnet, dass** der dritte Abschnitt (12) seitlich angeordnete Führungselemente (21) aufweist, welche eine Kraft quer zur Transportrichtung (9) auf das aus den Teilgebinden (5.1, 5.2) zusammengeführte Gebinde (2) bewirken.

10. Verfahren zur Herstellung von Gebinden (2), insbesondere mit einer Vorrichtung nach einem der vorhergehenden Ansprüche, wobei aus einem breitem Behälterstrom Behälter (3) in mehrere einspurige Behälterströme (4.1 bis 4.6) umgewandelt werden, durch Abtrennen und Zusammenführen einer vorbestimmten Anzahl an Behältern (3), Teilgebinde (5.1, 5.2) gebildet und nachfolgend jeweils zu dem Gebinde (2) zusammengefasst werden, wobei zumindest einer der Behälter (3) des Gebindes (2; 5.1, 5.2) ein Haft- oder Klebemittel und/oder einen Haft- oder Klebemittelauftrag zumindest an einer Kontakt- oder Berührfläche aufweist umfassend zumindest die Schritte:
- Versehen zumindest eines der Behälter (3) des jeweiligen Teilgebindes (5.1, 5.1) mit Haft- oder Klebemittel in einem ersten Abschnitt (10) des Lineartransporteurs (6);
- Zusammenführen der Behälter (3) zu dem jeweiligen Teilgebinde (5.1 und 5.2) indem die betreffenden Kopfführungen (15) querverschoben werden;
- Transportieren des jeweiligen Teilgebindes (5.1, 5.2) unter Krafteinwirkung mittels der Kopfführungen (15) quer ausgerichtet zur Transportrichtung (9);
- Ausrichten des jeweiligen Teilgebindes (5.1, 5.2) längs zur Transportrichtung (9);
- Versehen zumindest eines der Behälter des jeweiligen Teilgebindes (5.1, 5.1) mit Haft- oder Klebemittel in einem zweiten Abschnitt (10) des Lineartransporteurs (6);
- Zusammenführen der jeweiligen Teilgebinde (5.1, 5.2) in einem dritten Abschnitt (12) des Lineartransporteurs (6) zu dem Gebinde (2) und
- Weitertransport des Gebindes (2) in dem dritten Abschnitt (12) unter Krafteinwirkung.

## Claims

1. Device for producing packing units (2), wherein, from a wide container flow, by means of channel division, containers (3) are converted into a plurality of single-track container flows (4.1 to 4.6), and with at least one compartmenting unit and/or compacter unit for the compartmenting and compacting of a predetermined number of containers (3), part packing units (5.1, 5.2) are formed and subsequently, in each case, brought together to form the later packing unit (2), wherein application elements (13, 14) are provided, such that, on at least one of the containers (3) of the packing unit (2; 5.1, 5.2), an adherent or adhesive means and/or an adherent or adhesive application can be applied at least at one contact or touch surface, **characterised by** a linear transporter (6), which comprises three sections (10, 11, 12), wherein the first section (10) of the linear transporter (6) comprises three part regions (10.1 to 10.3), wherein, in the first part region (10.1) transport surfaces (16.1 to 16.6) are parallel to one another, wherein the transport surfaces (16.1 to 16.3 and 16.4 to 16.6) in the second part region (10.2) are brought together to form the respective part packing unit (5.1, 5.2), and wherein the respective part packing units (5.1, 5.2) in the third part region (10.3) are aligned transverse to the transport direction (9) and are transported in the direction to the second section (11) of the linear transporter (6), wherein, in its first and second sections (10, 11), the application elements (13, 14) are provided for the application of adherent or adhesive means, wherein transversedisplaceable head guides (15) are provided for the individual container transport in the first section (10) of the linear transporter (6), and wherein the second section (11) is configured as a rotating and feed section of part packing units (5.1, 5.2), and wherein the part packing units (5.1, 5.2), aligned in a third section (12) in the transport direction (9), are brought together to form the total packing unit (2) and are transported in the direction towards a discharge side (8).

2. Device according to claim 1, **characterised in that** the application elements (13) are arranged in a second part region (10.2) of the first section (10) of the linear transporter (6), and wherein the application elements (14) are arranged in the end region (22) of the second section (11).

3. Device according to claim 1 or 2, **characterised in that** the head guides (15) are mounted on transverse elements (17), which are preferably secured to a drive element (18) and circulate.

4. Device according to any one of the preceding claims, **characterised in that** the head guides (15) press together the respective containers (3) of the respective part packing unit (5.1, 5.2) in the first section (10) or in its third part region (10.3), wherein, upstream, the contact and touch surfaces in the second part region (10.2) can be provided with the adherent or adhesive means.

5. Device according to any one of the preceding claims, **characterised in that** the part packing units (5.1, 5.2) in the second section (11) can be aligned longitudinally to the transport direction (9).

6. Device according to any one of the preceding claims, **characterised in that** transport paths (19.1, 19.2) of the second section (11) are reduced in their transport width going outwards from the first section (10) in the direction towards the third section (12), wherein the minimum clear transport width is of larger dimensions than a diameter of the respective containers (3).

7. Device according to any one of the preceding claims, **characterised in that** application elements (14) are arranged in an end region (22) of the second section (11), by means of which at least one of the containers (3) of the respective part packing unit (5.1, 5.2) can be provided on its contact and touch surfaces with adherent or adhesive means.

8. Device according to any one of the preceding claims, **characterised in that** the third section (12) comprises two transport surfaces (20.1, 20.2).

9. Device according to any one of the preceding claims, **characterised in that** the third section (12) comprises laterally arranged guide elements (21), which exert a force transverse to the transport direction (9) onto the packing unit (2) being assembled from the part packing units (5.1, 5.2).

10. Method for forming packing units (2), in particular with a device according to any one of the preceding claims, wherein, from a wide container flow, containers (3) are converted into a plurality of single-track container flows (4.1 to 4.6), by the separation and bringing together of a predetermined number of containers (3) part packing units (5.1, 5.2) are formed and are subsequently each brought together to form the packing unit (2), wherein at least one of the containers (3) of the packing unit (2; 5.1, 5.2) comprises adherent or adhesive means and/or adhesive means application at least on one contact or touch surface, comprising at least the steps:
- provision of at least one of the containers (3) of the respective part packing unit (5.1, 5.2) with adherence or adhesive means in a first section (10) of the linear transporter (6);
- bringing together of the containers (3) to the respective part packing unit (5.1 and 5.2), in that the head guides (15) are pushed transversely;
- transporting of the respective part packing units (5.1, 5.2) under the effect of force by means of the head guides (15) aligned transversely to the transport direction (9);
- alignment of the respective part packing unit (5.1, 5.2) longitudinally to the transport direction (9);
- provision of at least one of the containers of the respective part packing unit (5.1, 5.2) with adherence or adhesive means in a second section (10) of the linear transporter (6);
- bringing together of the respective part packing units (5.1, 5.2) in a third section (12) of the linear transporter (6) to form the packing unit (2), and
- further transport of the packing unit (2) in the third section (12) under the effect of force.

## Revendications

1. Dispositif servant à fabriquer des colis (2), sachant que des contenants (3) sont convertis, à partir d'un large flux de contenants, au moyen d'un répartiteur de voies, en plusieurs flux de contenants (4.1 à 4.6) à une voie unique, avec au moins une unité de tri et/ou de compression servant à trier et à compresser un nombre prédéfini de contenants (3), sachant que des colis partiels (5.1, 5.2) sont formés et sont par la suite rassemblés respectivement pour former le colis (2) ultérieur, sachant que des éléments applicateurs (13, 14) sont prévus de sorte qu'un agent adhésif ou collant et/ou une couche d'agent adhésif ou collant peuvent être appliqués au moins au niveau d'une surface de contact au moins au niveau d'un des contenants (3) du colis (2 ; 5.1, 5.2), **caractérisé par** un transporteur linéaire (6), qui présente trois sections (10, 11, 12), sachant que la première section (10) du transporteur linéaire (6) présente trois zones partielles (10.1 à 10.3), sachant que des surfaces de transport (16.1 à 16.6) sont parallèles les unes par rapport aux autres dans la première zone partielle (10.1), sachant que les surfaces de transport (16.1 à 16.3 et 16.4 à 16.6) sont rassemblées dans la deuxième zone partielle (10.2) afin de former le colis partiel (5.1, 5.2) respectif, et sachant que le colis partiel (5.1, 5.2) respectif est orienté dans la troisième zone partielle (10.3) de manière transversale par rapport au sens de transport (9) et est transporté en direction de la deuxième section (11) du transporteur linéaire (6), sachant que les éléments applicateurs (13, 14) servant à appliquer l'agent adhésif ou collant sont prévus dans la première et dans la deuxième section (10, 11) dudit transporteur linéaire, sachant que des guidages de tête (15) pouvant être coulissés de manière transversale sont prévus aux fins du transport isolé de contenant dans la première section (10) du transporteur linéaire (6), et sachant que la deuxième section (11) est réalisée sous la forme d'une section de rotation et d'amenée de colis partiels (5.1, 5.2), et sachant que les colis partiels (5.1, 5.2) orientés dans le sens de transport (9) dans la troisième section (12) sont rassemblés pour former le colis (2) en entier et qu'ils sont transportés en direction d'un côté d'évacuation (8).

2. Dispositif selon la revendication 1, **caractérisé en ce que** les éléments applicateurs (13) sont disposés dans une deuxième zone partielle (10.2) de la première section (10) du transporteur linéaire (6), sachant que les éléments applicateurs (14) sont disposés dans la zone d'extrémité (22) de la deuxième section (11).

3. Dispositif selon la revendication 1 ou 2, **caractérisé en ce que** les guidages de tête (15) sont logés au niveau de traverses transversales (17), qui sont fixées de manière préférée au niveau d'un élément d'entraînement (18) et sont rotatives.

4. Dispositif selon l'une quelconque des revendications précédentes, **caractérisé en ce que** les guidages de tête (15) pressent les uns contre les autres les contenants (3) respectifs du colis partiel (5.1, 5.2) respectif dans la première section (10) ou dans la troisième zone partielle (10.3) de cette dernière, sachant que les surfaces de contact peuvent être pourvues en amont, dans la deuxième zone partielle (10.2), d'un agent adhésif ou collant.

5. Dispositif selon l'une quelconque des revendications précédentes, **caractérisé en ce que** les colis partiels (5.1, 5.2) peuvent être orientés dans la deuxième section (11) le long du sens de transport (9).

6. Dispositif selon l'une quelconque des revendications précédentes, **caractérisé en ce que** des voies de transport (19.1, 19.2) de la deuxième section (11) sont réduites au niveau de leur largeur de transport depuis la première section (10) en direction de la troisième section (12), sachant que la largeur intérieure de transport minimale présente des dimensions plus grandes qu'un diamètre des contenants (3) respectifs.

7. Dispositif selon l'une quelconque des revendications précédentes, **caractérisé en ce que** sont disposés, dans une zone d'extrémité (22) de la deuxième section (11), des éléments applicateurs (14), au moyen desquels au moins un des contenants (3) du colis partiel (5.1, 5.2) respectif peut être pourvu d'un agent adhésif ou collant au niveau de ses surfaces de contact.

8. Dispositif selon l'une quelconque des revendications précédentes, **caractérisé en ce que** la troisième section (12) présente deux surfaces de transport (20.1, 20.2).

9. Dispositif selon l'une quelconque des revendications précédentes, **caractérisé en ce que** la troisième section (12) présente des éléments de guidage (21) disposés sur le côté, lesquels provoquent une force de manière transversale par rapport au sens de transport (9) sur le colis (2) issu du rassemblement des colis partiels (5.1, 5.2).

10. Procédé servant à fabriquer des colis (2), en particulier à l'aide d'un dispositif selon l'une quelconque des revendications précédentes, sachant que des contenants (3) sont convertis, à partir d'un large flux de contenants, en plusieurs flux de contenants (4.1 à 4.6) à une voie unique, par séparation et rassemblement d'un nombre prédéfini de contenants (3), sachant que des colis partiels (5.1, 5.2) sont formés et sont par la suite rassemblés respectivement pour former le colis (2), sachant qu'au moins un des contenants (3) du colis (2 ; 5.1, 5.2) présente un agent adhésif ou collant et/ou une couche d'agent adhésif ou collant au moins au niveau d'une surface de contact, comprenant au moins les étapes qui suivent consistant à :
- pourvoir au moins un des contenants (3) du colis partiel (5.1, 5.1) respectif d'un agent adhésif ou collant dans une première section (10) du transporteur linéaire (6) ;
- rassembler les contenants (3) pour former le colis partiel (5.1 et 5.2) respectif en ce que les têtes de guidage (15) concernées sont déplacées par un coulissement transversal ;
- transporter le colis partiel (5.1, 5.2) respectif sous l'action d'une force au moyen des têtes de guidage (15) selon une orientation transversale par rapport au sens de transport (9) ;
- orienter le colis partiel (5.1, 5.2) respectif le long du sens de transport (9);
- pourvoir au moins un des contenants du colis partiel (5.1, 5.2) respectif d'un agent adhésif ou collant dans une deuxième section (10) du transporteur linéaire (6) ;
- rassembler les colis partiels (5.1, 5.2) respectifs dans une troisième section (12) du transporteur linéaire (6) pour former le colis (2) ; et
- poursuivre le transport du colis (2) dans la troisième section (12) sous l'action d'une force.
